# EUROPÄISCHE PATENTSCHRIFT

(11) **EP 3 232 622 B1**
(45) Veröffentlichungstag und Bekanntmachung des Hinweises auf die Patenterteilung: **24.07.2019**
(21) Anmeldenummer: 16165422.3
(22) Anmeldetag: 14.04.2016
(51) Int. Cl.: H04L 12/911, H04W 28/24, H04L 12/24, H04W 28/18

(54) **NETZWERKENTITÄT IN EINEM SUBNETZWERK EINER MEHRZAHL VON SUBNETZWERKEN**
NETWORK ENTITY IN A SUBNETWORK OF A PLURALITY SUBNETWORKS
ENTITÉ DE RÉSEAU DANS UN SOUS-RÉSEAU D'UNE PLURALITÉ DE SOUS-RÉSEAUX

(43) Veröffentlichungstag der Anmeldung: 18.10.2017
(73) Patentinhaber: Deutsche Telekom AG, 53113 Bonn (DE)
(72) Erfinder: ARNOLD, Paul, 60389 Frankfurt/Main (DE); BELSCHNER, Jakob, 60322 Frankfurt/Main (DE)
(74) Vertreter: Patentship Patentanwaltsgesellschaft mbH

(56) Entgegenhaltungen:
- WO-A1-2016/045702
- US-A1- 2014 376 563
- "3rd Generation Partnership Project; Technical Specification Group Services and System Aspects; Study on Architecture for Next Generation System (Release 14)", 3GPP DRAFT; 23799-030-RM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 5. April 2016 (2016-04-05), XP051086427, Gefunden im Internet: URL:http://www.3gpp.org/ftp/tsg_sa/WG2_Arc h/TSGS2_114_Sophia_Antipolis/Docs/ [gefunden am 2016-04-05]

## Beschreibung

Die vorliegende Erfindung betrifft die Steuerung von Funkzugangsressourcen in einem Kommunikationsnetzwerk mit voneinander getrennten Subnetzwerken, beispielsweise Slices eines 5G-Kommunikationsnetzwerks.

In modernen Kommunikationsnetzwerken ist die Dienstgüte (Quality of Service) ein wichtiger Faktor zur Beurteilung der Leistungsfähigkeit einer Kommunikationstechnologie. In LTE-Kommunikationssystemen ist die Dienstgüte im Rahmen des 3GPP-Standards beschrieben. Gemäß 3GPP14-23203 ist die Dienstgüte benutzerspezifisch in Abhängigkeit von Dienstgüteparametern wie Durchsatz, Latenz, Bitfehlerrate definiert. Diese Dienstgüteparameter werden beispielsweise in einer Basisstation wie eNodeB in einem LTE-Netzwerk benutzt, um beispielsweise das Scheduling der Daten eines Benutzers zu bestimmen, bei dem die geforderte Dienstgüte sichergestellt wird.

Die nachfolgenden Generationen der mobilen Technologien, beispielsweise die fünfte Generation der mobilen Technologie (5G), verändern jedoch die klassische Netzwerkarchitektur zugunsten von heterogenen Subnetzwerken, sog. Slices, welche logisch voneinander separiert sind. In 5G können insbesondere unterschiedliche Funkzugangstechnologien für die Kommunikation über die Slices verwendet werden.

In 3GPP14-23799 V0.3.0 sind verschiedene Zielsetzungen und Lösungsansätze für Netzwerkarchitekturen der nächsten Generation angegeben, wobei ein Ansatz zur Berücksichtigung einer Dienstgüte (Quality of Service) beschrieben ist.

In US 2014/0376563 A1 ist ein Ansatz zum Übertragen von Audio-Daten und Nicht-Audio-Daten über einen QoS-Kanal und einen Nicht-QoS-Kanal zwischen zwei User Equipments (UEs) beschrieben.

Es ist die Aufgabe der vorliegenden Erfindung, ein effizientes Dienstgüte-Konzept in einem Kommunikationsnetzwerk mit heterogenen Subnetzwerken, welche über Funkzugangstechnologien erreichbar sind, zu schaffen.

Diese Aufgabe wird durch die Merkmale der unabhängigen Ansprüche gelöst. Vorteilhafte Weiterbildungsformen der Erfindung sind Gegenstand der Beschreibung, der abhängigen Ansprüche, sowie der Figuren.

Die vorliegende Erfindung basiert auf der Erkenntnis, dass heterogene Subnetzwerke eines Kommunikationsnetzwerks, beispielsweise Slices eines 5G-Kommunikationsnetzwerks, Dienstgüten zugeordnet werden können, welche für das jeweilige Subnetzwerk an sich gelten. Diese Dienstgüten sind Subnetzwerken des Kommunikationsnetzwerks zugeordnet. Die Subnetzwerke sind beispielsweise für unterschiedliche Dienste vorgesehen und führen daher dienstspezifische Datenströme mit Dienstgüten, welche gemäß Dienstgütevereinbarungen vorgesehen sind. Daher können unterschiedlichen Subnetzwerken desselben Kommunikationsnetzwerks unterschiedliche Dienstgüten zugeordnet werden. Darüber hinaus können innerhalb eines Subnetzwerks unterschiedliche Dienstgüten für unterschiedliche Datenströme vorgesehen oder vereinbart werden. Die Dienstgüten können beispielsweise die Mindestanforderungen an Dienstgüte definieren, welche einzuhalten sind, beispielsweise zu 95% der Übertragungszeit soll zumindest mit der Dienstgüte bereitgestellt werden. Daher können über die Subnetzwerke auch Datenströme mit höheren Dienstgüten als die zumindest vereinbarte Dienstgüte für das jeweilige Subnetzwerk geführt werden. Im Allgemeinen kann das jeweilige Subnetzwerk mehrere Datenströme mit einer oder unterschiedlichen Dienstklassen führen, wobei die für das jeweilige Subnetzwerk vereinbarte Dienstgüte die niedrigste Dienstgüte ist. Mit zunehmender Dienstgüte nimmt beispielsweise auch die Übertragungsqualität zu. Die Dienstgüten können sich beispielsweise in Datenrate, Bandbreite, Latenzzeit oder Bit- bzw. Blockfehlerrate unterscheiden.

Ein Subnetzwerk kann auch weitere Dienstgüten unterstützen, welche höhere Dienstgüten als die Dienstgüte gemäß der jeweiligen Dienstgütevereinbarung aufweisen.

Zur Einhaltung der Dienstgüten in den Subnetzwerken wird beispielsweise die Vergabe der Funkzugangsressourcen bzw. Kommunikationsressourcen, wie beispielsweise Zeit und/oder Frequenzressourcen in beispielsweise einem OFMDA-System, der Funkzugangstechnologien, sog. RAT (Radio Access Technology), Dienstgüten abhängig bewirkt. Hierbei können einem Subnetzwerk, beispielsweise einem Slice, durch eine Funkzugangsentität wie Basisstation zusätzliche Funkzugangsressourcen bereitgestellt werden, um die dem Subnetzwerk zugewiesene Dienstgüte zu gewährleisten.

Zur Angabe der Dienstgüten werden die Datenströme bzw. Datenverkehre der Subnetzwerke mit Dienstgüteindikatoren versehen. Dadurch werden die Datenverkehre für sämtliche Netzentitäten, also auch Funkzugangsentitäten, gekennzeichnet, sodass diese Netzwerkentitäten den gekennzeichneten Datenströmen die Kommunikationsressourcen, insbesondere Funkzugangsressourcen, gemäß den Dienstgüten zur Verfügung stellen, um die Dienstgüten einzuhalten.

Für ein Subnetzwerk können eine oder mehrere Dienstgüten vereinbart sein und dem jeweiligen Subnetzwerk zugeordnet sein. Die Dienstgüten können beispielsweise unterschiedliche Dienstgütequalitäten für unterschiedliche Datenströme oder Services angeben, wie beispielsweise Best-Effort-Service mit einer geringeren Dienstgüte oder eine Ultra-Reliable-Communication mit einer höheren Dienstgüte.

Die Angabe über die Dienstgüte kann die jeweilige Dienstgüte spezifizieren. Die Angabe kann beispielsweise eine QoS-Identifier aufweisen, welcher auf eine Dienstgüte (QoS, Quality of Service) hinweist.

Die Subnetzwerke können unterschiedliche Services bereitstellen. So kann ein erstes Subnetzwerl ein LTE-Subnetzwerk mit einer Dienstgüte, ein weiteres Subnetzwerk kann ein mMTC-Subnetzwerk mit einer oder mehreren Dienstgüten, und ein weiteres Subnetzwerk kann ein Car-to-X-Subnetzwerk sein, welches zwei Dienstgüten unterstützt, wie beispielsweise Best Effort oder Ultra-Reliable-Communication.

Gemäß einem ersten Aspekt betrifft die Erfindung eine Netzwerkentität in einem Subnetzwerk einer Mehrzahl von Subnetzwerken eines Kommunikationsnetzwerks, wobei dem Subnetzwerk zumindest eine vorgegebene Dienstgüte gemäß zumindest einer Dienstgütevereinbarung zugeordnet ist, wobei die Netzwerkentität die folgenden Merkmale aufweist: eine Kommunikationsschnittstelle zum Empfangen des Datenverkehrs des Subnetzwerks, und einem Indizierer, welcher ausgebildet ist, dem Datenverkehr einen Dienstgüteindikator hinzuzufügen, um einen indizierten Datenverkehr zu erhalten, wobei der Dienstgüteindikator die Dienstgüte angibt. Dadurch können sämtliche Netzentitäten des Kommunikationsnetzwerks für einen Datenverkehr des Netzwerks diejenigen Kommunikationsressourcen wie beispielsweise Bandbreite zuordnen, welche für die Einhaltung der Dienstgüte im Subnetzwerk erforderlich sind. Die Kommunikationsressourcen können in den Netzwerkentitäten den Dienstgüten eindeutig zugeordnet sein, beispielsweise in der Form eine Look-up-Tabelle.

Gemäß einer Ausführungsform ist der Indizierer ausgebildet, den Dienstgüteindikator zumindest einem Datenpaket oder jedem Datenpaket des Datenverkehrs des Subnetzwerks hinzuzufügen, um den indizierten Datenverkehr zu erhalten. Auf diese Weise können für die Datenpakete diejenigen Kommunikationsressourcen bereitgestellt werden, welche der Dienstgüte zugeordnet sind.

Gemäß einer Ausführungsform ist der Indizierer ausgebildet, den Dienstgüteindikator in ein Datenpaketfeld eines Datenrahmens des Datenverkehrs, insbesondere eines Datenrahmens eines Datenpaketes des Datenverkehrs hineinzuschreiben. Das Datenpaketfeld kann ein freies Feld des Datenrahmens sein, das für Daten oder Kontrollinformation gemäß einem Kommunikationsprotokoll wie IPV6 freigehalten ist. Gemäß einer Ausführungsform definiert die Dienstgüte zumindest eine der folgenden Kommunikationsressourcen in dem Subnetzwerk: Bandbreite, Datenrate, Bitrate, Bitfehlerrate, Blockfehlerrate, Übertragungsverzögerung, Anzahl und/oder Zeitlage von Zeitschlitzen, Frequenzspektrum. Durch diese Angaben kann eine Netzentität wie beispielsweise eine Basisstation dem Datenverkehr diejenigen Kommunikationsressourcen, beispielsweise Anzahl der Zeitschlitze oder Bandbreite, zuweisen, welche für die Dienstgüte vorgesehen sind.

Erfindungsgemäß weist der Dienstgüteindikator ferner einen Subnetzwerk-Identifikator, welcher das Subnetzwerk bezeichnet. Auf diese Weise kann die Dienstgüte dem Subnetzwerk zugeordnet werden.

Gemäß einer Ausführungsform weist der Dienstgüteindikator ferner einen SLA-Indikator (SLA: Service Level Agreement) auf, wobei der SLA-Indikator die Dienstgütevereinbarung des Subnetzwerks anzeigt, in welcher die Dienstgüte spezifiziert ist. Auf diese Weise können weitere Angaben übertragen werden, welche nicht zwingend die Kommunikationsressourcen angeben, beispielsweise die prozentuale Angabe der Kommunikationszeit, in welcher die jeweilige Dienstgütevereinbarung und somit Dienstgüte gültig sind. Diese Angabe kann beispielsweise spezifizieren, dass die Dienstgütevereinbarung in 95% der Kommunikationszeit gilt. Dadurch können die Netzwerkentitäten entscheiden, die Kommunikationsressourcen in der restlichen Zeit beispielsweise anderen Datenströmen bzw. verkehren zuzuweisen.

Gemäß einer Ausführungsform weist der Dienstgüteindikator ferner einen Status-Indikator auf, wobei der Status-Indikator den gegenwärtigen Dienstgüte-Status des Datenverkehrs anzeigt. Durch den Status-Indikator kann daher angezeigt werden, inwiefern die jeweilige Dienstgütevereinbarung bereits eingehalten wurde, beispielsweise dass 99% der bisherigen Kommunikationszeit mit der vereinbarten Dienstgüte bewirkt wurde. Auf diese Weise kann beispielsweise eine Funkzugangsentität entscheiden, die Kommunikationsressourcen freizugeben, falls die Dienstgütevereinbarung erreicht wurde, oder aufrechterhalten bzw. zu erhöhen, um die Dienstgüte gemäß der Dienstgütevereinbarung bereitzustellen.
Gemäß einer Ausführungsform definiert die Dienstgüte eine Mindestdienstgüte für den Datenverkehr in dem Subnetzwerk. Daher ist es möglich, dass Datenverkehre bzw. Datenströme des Subnetzwerks mit einer höheren Dienstgüte übertragen werden als diese durch die Dienstgüte gekennzeichnet ist.

Gemäß einer Ausführungsform weist der Dienstgüteindikator ferner einen Datenverkehr-Indikator auf, wobei der Datenverkehr-Indikator zusätzlich eine Dienstgüte des Datenverkehrs anzeigt. Die Dienstgüte des Datenverkehrs kann beispielsweise höher als die Dienstgüte des Subnetzwerks gemäß der Dienstgüte sein und beispielsweise dem Datenverkehr an sich oder einem Benutzer zugeordnet sein. Auf diese Weise können die Netzwerkentitäten des Kommunikationsnetzwerks dem Datenverkehr noch mehr Kommunikationsressourcen zuweisen, um diese höhere Dienstgüte zu erreichen.

Gemäß einer Ausführungsform ist die Kommunikationsschnittstelle ausgebildet, den indizierten Datenverkehr an eine weitere Netzentität des Subnetzwerkes oder an eine Funkzugangsentität, insbesondere eine Basisstation, eines Funkzugangsnetzwerkes auszusenden. Die weitere Netzentität kann beispielsweise eine Funktion des Subnetzwerks sein, wie beispielswese Router, Firewall etc. Die Funkzugangsentität ist bevorzugt für den Funkzugang zu dem Kommunikationsnetzwerk bzw. zu dem Subnetzwerk, beispielsweise durch ein mobiles Endgeräte wie ein Smartphone, vorgesehen.

Die Funkzugangsentität bzw. die Netzwerkentität weist dem Datenverkehr bzw. dem Subnetzwerk diejenigen Kommunikationsressourcen bzw. Funkzugangsressourcen zu, welche für die Einhaltung der jeweiligen Dienstgütekasse benötigt werden. Hierzu kann die Funkzugangsentität bzw. die Netzwerkentität jeweils eine Datenbank oder eine Look-up-Tabelle aufweisen, in welcher die Funkzugangsressourcen und/oder die Verarbeitungsressourcen den Dienstgüten zugeordnet sind. Die Funkzugangsentität kann die Funkzugangsressourcen bzw. die Kommunikationsressourcen jedoch anhand der Angaben über die Dienstgüten ermitteln. Hierzu können beispielsweise Optimierungsprogramme ausgeführt werden, welche die Funkzugangsressourcen für die jeweiligen Dienstgüten ermitteln.

Gemäß einer Ausführungsform ist die Kommunikationsschnittstelle eine optische Kommunikationsschnittstelle. Die Kommunikationsschnittstelle kann ferner ausgebildet sein, den indizierten Datenverkehr auszusenden.

Gemäß einem zweiten Aspekt betrifft die Erfindung ein Kommunikationsnetzwerk mit einer Mehrzahl von Subnetzwerken, wobei jedem Subnetzwerk zumindest eine Dienstgüte zugeordnet ist, und wobei in jedem Subnetzwerk eine Netzwerkentität nach dem ersten Aspekt angeordnet ist, um dem Datenverkehr in jedem Subnetzwerk jeweils einen Dienstgüteindikator hinzuzufügen, welcher die Dienstgüte des jeweiligen Subnetzwerks anzeigt.

Die Subnetzwerke sind beispielsweise Netzwerk-Slices eines Kommunikationsnetzwerks, beispielsweise eines 5G-Kommunikationsnetzwerks.

Gemäß einer Ausführungsform sind die Subnetzwerke Punkt-zu-Punkt-Netzwerke, welche kommunikationstechnisch voneinander getrennt sind.

Gemäß einer Ausführungsform ist das Kommunikationsnetzwerk ein Kommunikationssetzwerk zumindest der fünften (5G) Generation ist, wobei die Subnetzwerke Netzwerk-Slices sind.

Gemäß einem dritten Aspekt betrifft die Erfindung ein Verfahren zum Indizieren eines Datenverkehrs in einem Subnetzwerk eines Kommunikationsnetzwerks mit einer Mehrzahl von Subnetzwerken, wobei dem Subnetzwerk zumindest eine vorgegebene Dienstgüte gemäß zumindest einer Dienstgütevereinbarung zugeordnet ist, mit:
Empfangen des Datenverkehrs des Subnetzwerks (305); und
Indizieren des Datenverkehrs mit einem Dienstgüteindikator, um den indizierten Datenverkehr zu erhalten, wobei der Dienstgüteindikator die Dienstgüte angibt, und wobei der Dienstgüteindikator ferner einen Subnetzwerk-Identifikator aufweist, welcher das Subnetzwerk bezeichnet.

Das Verfahren kann mittels der Netzwerkentität nach dem ersten Aspekt ausgeführt werden.

Gemäß einer Ausführungsform wird der indizierte Datenverkehr an eine weitere Netzentität des Subnetzwerkes oder an eine Funkzugangsentität des Kommunikationsnetzwerks, insbesondere eine Basisstation, eines Funkzugangsnetzwerkes ausgesendet.

Gemäß einem vierten Aspekt betrifft die Erfindung eine Funkzugangsentität eines Funkzugangsnetzwerks, insbesondere eine Basisstation, für die Kommunikation zwischen einem mobilen Endgerät und einem Subnetzwerk eines Kommunikationsnetzwerks mit einer Mehrzahl von Subnetzwerken, wobei dem Subnetzwerk zumindest eine vorgegebene Dienstgüte gemäß zumindest einer Dienstgütevereinbarung zugeordnet ist, mit: einer Kommunikationsschnittstelle zum Empfangen eines indizierten Datenverkehrs von dem Kommunikationsnetzwerk, wobei der indizierte Datenverkehr einen Dienstgüteindikator aufweist, welcher die Dienstgüte des Subnetzwerks angibt, und wobei der Dienstgüteindikator ferner einen Subnetzwerk-Indikator aufweist, welcher das Subnetzwerk bezeichnet; und einem Ressourcenmanager, welcher ausgebildet ist, dem indizierten Datenverkehr Kommunikationsressourcen zuzuweisen, welche der Dienstgüte zugeordnet sind.

Die Kommunikationsschnittstelle kann eine optische Kommunikationsschnittstelle sein.

Gemäß einer Ausführungsform weist der Dienstgüteindikator ferner einen Status-Indikator auf, wobei der Status-Indikator den gegenwärtigen Dienstgüte-Status des Datenverkehrs anzeigt. Durch den Status-Indikator kann daher angezeigt werden, inwiefern die jeweilige Dienstgütevereinbarung bereits eingehalten wurde, beispielsweise dass 99% der bisherigen Kommunikationszeit mit der vereinbarten Dienstgüte bewirkt wurde. Auf diese Weise kann die Funkzugangsentität bzw. der Ressourcenmanager entscheiden, die Kommunikationsressourcen freizugeben, falls die Dienstgütevereinbarung erreicht wurde, oder aufrechterhalten bzw. zu erhöhen, um die Dienstgüte gemäß der Dienstgütevereinbarung bereitzustellen.

Gemäß einer Ausführungsform ist der Ressourcenmanager ausgebildet, dem indizierten Datenverkehr zumindest eine der folgenden Kommunikationsressourcen gemäß der Dienstgüte zuzuweisen: Bandbreite, Datenrate, Bitrate, Bitfehlerrate, Blockfehlerrate, Übertragungsverzögerung, Anzahl und/oder Zeitlage von Zeitschlitzen, Frequenzspektrum. Der Ressourcenmanager kann

Die Funkzugangsentität entscheidet gemäß einer Ausführungsform eigenständig über die zu verteilenden Funkzugangsressourcen. Der Ressourcen-Manager kann die Funkzugangsressourcen bzw. Kommunikationsressourcen auf der Basis der Dienstgüte steuern bzw. dem Datenverkehr zuweisen. Dies kann beispielsweise auf der Basis einer Look-up-Tabelle erfolgen, in welcher unterschiedlichen Dienstgüten unterschiedliche Funkzugangsressourcen bzw. Kommunikationsressourcen zugeordnet sind.

Gemäß einer Ausführungsform entsprechen die Dienstgüten den QCI-Klassen (QCI: QoS Class Identifier), beispielsweise eines LTE-Kommunikationssystems.

Gemäß einer Ausführungsform weisen die Funkzugangsressourcen zumindest eine der folgenden Funkzugangsressourcen auf: Bandbreite, Frequenzspektrum, Zeitressourcen, Anzahl von Übertragungsrahmen, Anzahl von Zeitschlitzen, Sendeleistung, Zeitlage von Zeitschlitzen, Zeitlage von Übertragungsrahmen.

Gemäß einer Ausführungsform definiert die jeweilige Dienstgüte zumindest einen der folgenden Parameter auf: Bandbreite, Datenrate, Bitrate, Bitfehlerrate, Blockfehlerrate, Übertragungsverzögerung.

Gemäß einer Ausführungsform ist die Funkzugangsentität für eine der folgenden Funkzugangstechnologien ausgelegt: LTE, WLAN, UMTS, GSM, 5G, und Kommunikationstechnologien für Maschine Type Communication (MTC).

Weitere Ausführungsbeispiele werden Bezug nehmend auf die beiliegenden Zeichnungen erläutert. Es zeigen:
- Fig. 1: eine beispielhafte 5G-Systemarchitektur;
- Fig. 2: eine schematische Darstellung eines 5G-Kommunikationsnetzwerks;
- Fig. 3: ein Kommunikationssystem;
- Fig. 4: ein Blockdiagramm einer Netzwerkentität; und
- Fig. 5: ein Blockdiagramm einer Funkzugangsentität.

Die im Folgenden vorgestellten Verfahren und Systeme können von verschiedener Art sein. Die einzelnen beschriebenen Elemente können durch Hardware- oder Softwarekomponenten realisiert sein, beispielsweise elektronische Komponenten, die durch verschiedene Technologien hergestellt werden können und zum Beispiel Halbleiterchips, ASICs, Mikroprozessoren, digitale Signalprozessoren, integrierte elektrische Schaltungen, elektrooptische Schaltungen und/oder passive Bauelemente umfassen.

Die im Folgenden vorgestellten Geräte, Systeme und Verfahren sind dafür geeignet, Informationen über ein Kommunikationsnetzwerk zu übertragen. Der Begriff Kommunikationsnetzwerk oder Kommunikationsnetz bezeichnet dabei die technische Infrastruktur, auf der die Übertragung von Signalen stattfindet. Das Kommunikationsnetz umfasst im Wesentlichen das Vermittlungsnetz, in dem die Übertragung und Vermittlung der Signale zwischen den ortsfesten Einrichtungen und Plattformen des Mobilfunknetzes oder Festnetzes stattfinden, sowie das Funkzugangsnetz, in dem die Übertragung der Signale zwischen einer Netzwerkzugangseinrichtung und dem Kommunikationsendgerät stattfindet. Das Kommunikationsnetz kann hierbei sowohl Komponenten eines Mobilfunknetzes als auch Komponenten eines Festnetzes umfassen. Im Mobilfunknetz wird das Funkzugangsnetz auch als Luftschnittstelle bezeichnet und umfasst beispielsweise eine Basisstation (NodeB, eNodeB, Funkzelle) mit Mobilfunkantenne, um die Kommunikation zu einem Kommunikationsendgerät wie beispielsweise einem Mobiltelefon bzw. Smartphone oder einer mobilen Einrichtung mit Mobilfunkadapter aufzubauen. Im Festnetz umfasst das Funkzugangsnetz beispielsweise einen DSLAM (Digital Subscriber Line Access Multiplexer), um die Kommunikationsendgeräte mehrerer Teilnehmer draht- bzw. kabelgebunden anzuschließen. Über das Vermittlungsnetz kann die Kommunikation in weitere Netze, beispielsweise anderer Netzbetreiber, z.B. Auslandsnetze, weitervermittelt werden.

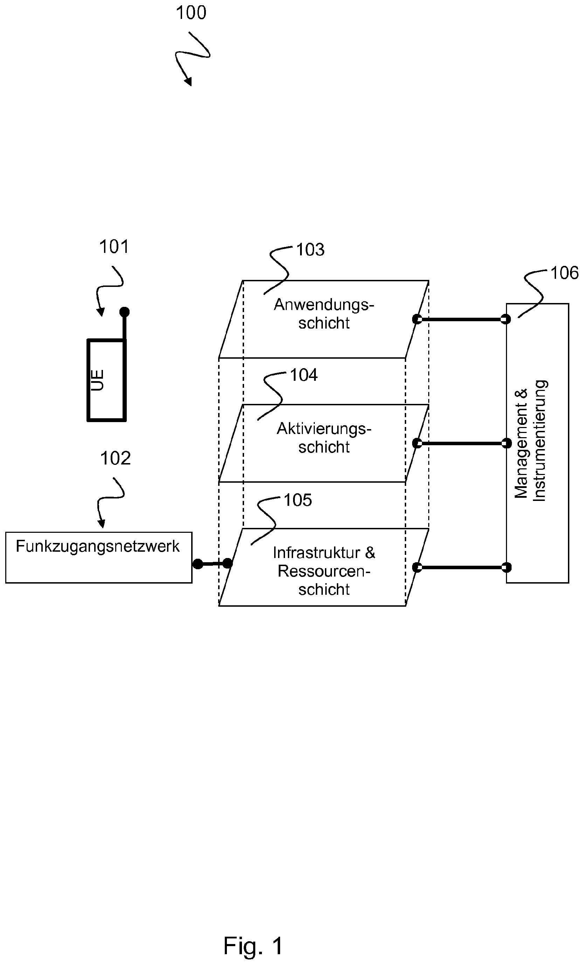

Die im Folgenden vorgestellten Geräte, Systeme und Verfahren sind dazu vorgesehen, die Kommunikation in Kommunikationsnetzen zu steigern, insbesondere in Kommunikationsnetzen gemäß der im Folgenden vorgestellten 5G Systemarchitektur. Fig. 1 zeigt eine schematische Darstellung einer solchen 5G Systemarchitektur 100. Die 5G Systemarchitektur 100 umfasst einen Bereich mit 5G Kommunikationsendgeräten 101, die über verschiedene Zugangstechnologien 102 mit einer mehrschichtigen Kommunikationsstruktur verbunden sind, welche eine Infrastruktur- & Ressourcenschicht 105, eine Aktivierungsschicht 104 und eine Anwendungsschicht 103 umfasst, die über eine Management- & Instrumentierungsebene 106 verwaltet werden.

Die Infrastruktur- & Ressourcenschicht 105 umfasst die physikalischen Ressourcen einer konvergenten Netzwerkstruktur aus Festnetz- und Mobilfunknetzkomponenten (sog. Fixed-Mobile Convergence) mit Zugangsknoten, Cloud-Knoten (bestehend aus Verarbeitungs- und Speicherknoten), 5G Geräten wie z.B. Mobiltelefonen, tragbaren Geräten, CPEs, Maschinenkommunikationsmodulen und anderen, Netzwerkknoten und zugehörigen Links. 5G Geräte können vielfältige und konfigurierbare Fähigkeiten umfassen und beispielsweise als Relay oder Hub agieren oder abhängig von dem jeweiligen Kontext als Computer/Speicher Ressource arbeiten. Diese Ressourcen werden den höheren Schichten 104, 103 und der Management- & Instrumentierungsebene 106 über entsprechend APIs (Anwendungsprogramm-Schnittstellen) zur Verfügung gestellt. Das Überwachen der Leistungsfähigkeit und der Konfigurationen sind inhärenter Teil solcher APIs.

Die Aktivierungsschicht 104 umfasst eine Bibliothek von Funktionen, die innerhalb eines konvergierten Netzwerks in Form von Bausteinen einer modularen Architektur benötigt werden. Diese umfassen Funktionen, die durch Softwaremodule realisiert werden, die von einem Aufbewahrungsort der gewünschten Lokation abgerufen werden können, und einen Satz von Konfigurationsparametern für bestimmte Teile des Netzwerks, z.B. den Funkzugang. Diese Funktionen und Fähigkeiten können auf Anforderung durch die Management- & Instrumentierungsebene 106 aufgerufen werden durch Nutzung der dafür vorgesehenen APIs. Für bestimmte Funktionen können mehrfache Varianten existieren, z.B. verschiedene Implementierungen derselben Funktionalität welche verschiedene Leistungsfähigkeit oder Charakteristik haben. Die verschiedenen Grade der Leistungsfähigkeit und der angebotenen Fähigkeiten können dazu verwendet werden, um die Netzwerkfunktionalitäten wesentlich weiter zu unterscheiden als es in heutigen Netzen möglich ist, z.B. als Mobilitätsfunktion eine nomadische Mobilität, eine Fahrzeugmobilität oder eine Luftverkehrsmobilität in Abhängigkeit der spezifischen Bedürfnisse anzubieten.

Die Anwendungsschicht 103 umfasst spezifische Anwendungen und Dienste des Netzwerkbetreibers, des Unternehmens, des vertikalen Operators oder von Drittparteien, die das 5G Netzwerk nutzen. Die Schnittstelle zu der Management- & Instrumentierungsebene 106 erlaubt zum Beispiel, bestimmte, d.h. dedizierte Netzwerk Slices (Netzwerkscheiben bzw. Subnetzwerke) für eine Anwendung aufzubauen, oder eine Anwendung einem existierenden Netzwerk Slice zuzuweisen.

Die Management- & Instrumentierungsebene 106 ist der Kontaktpunkt, um die geforderten Anwendungsfälle in tatsächliche Netzwerkfunktionen und Slices umzusetzen. Sie definiert die Netzwerk Slices für ein gegebenes Anwendungsszenario, verkettet die dafür relevanten modularen Netzwerkfunktionen, ordnet die relevanten Leistungsfähigkeitskonfigurationen zu und bildet alles auf die Ressourcen der Infrastruktur- & Ressourcenschicht 105 ab. Die Management- & Instrumentierungsebene 106 verwaltet auch die Skalierung der Kapazität dieser Funktionen als auch ihre geographische Verteilung. In bestimmten Anwendungsfällen kann sie auch Fähigkeiten aufweisen, die es Drittparteien erlauben, durch Nutzung der APIs ihre eigenen Netzwerk Slices zu erzeugen und zu verwalten. Aufgrund der vielzähligen Aufgaben der Management- & Instrumentierungsebene 106 handelt es sich dabei nicht um einen monolithischen Block von Funktionalität sondern vielmehr um eine Sammlung modularer Funktionen, die Fortschritte integrieren, die in verschiedenen Netzwerkdomänen erzielt wurden, wie beispielsweise NFV (Network Function Virtualization, Netzwerkfunktionsvirtualisierung), SDN (Software-defined Networking, Software-definierte Vernetzung) oder SON (Self-organizing Networks, selbstorganisierende Netzwerke). Die Management- & Instrumentierungsebene 106 nutzt dabei datenunterstützte Intelligenz, um alle Aspekte der Dienstanordnung und -bereitstellung zu optimieren.

Die hier vorgestellten Geräte, Systeme und Verfahren sind dazu vorgesehen, die Kommunikation in Kommunikationsnetzen zu verbessern, insbesondere in 5G Kommunikationsnetzen mit mehreren Netzwerk Slices (Netzwerkscheiben), wie im Folgenden beschrieben.

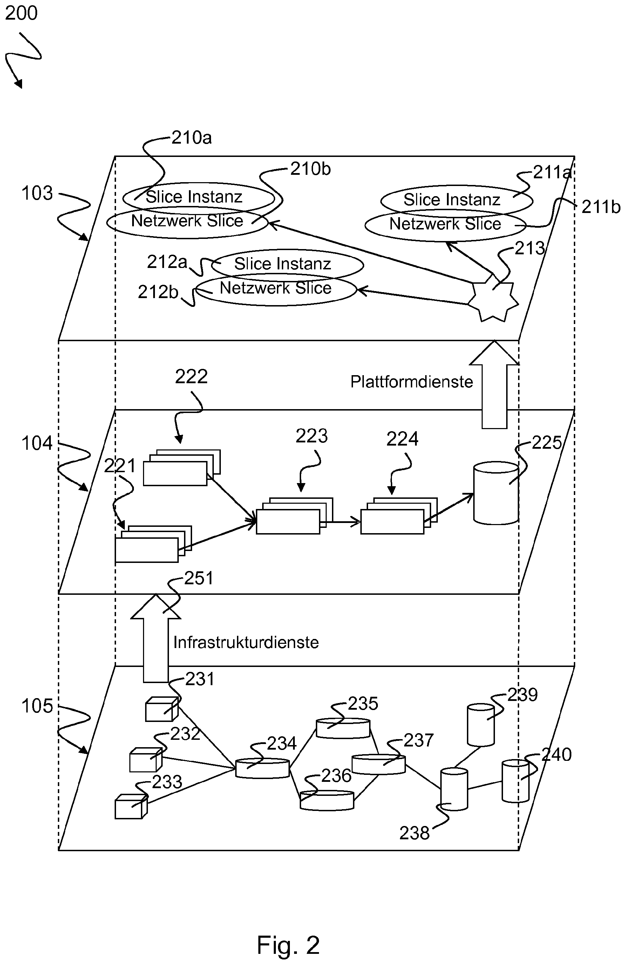

Fig. 2 zeigt eine schematische Darstellung eines 5G-Kommunikationsnetzwerks 200 mit mehreren Netzwerk Slices (Netzwerkscheiben). Das 5G-Kommunikationsnetzwerks 200 umfasst eine Infrastruktur- & Ressourcenschicht 105, eine Aktivierungsschicht 104 und eine Anwendungsschicht 103.

Die Infrastruktur- & Ressourcenschicht 105 umfasst alle physikalischen Aktiva, die einem Netzwerkbetreiber zugeordnet sind, d.h. Standorte, Kabel, Netzwerkknoten etc. Diese Schicht 105 bildet die Grundlage für alle Netzwerk Slices. Sie ist so generisch wie möglich aufgebaut ohne zu viele spezialisierte physikalische Einheiten. Die Infrastruktur- & Ressourcenschicht 105 verschleiert jede Art von anwenderspezifischer Implementierung gegenüber den oberen Schichten, so dass die verbleibenden Systeme für verschiedene Slices bestmöglich genutzt werden können. Komponenten der Infrastruktur- & Ressourcenschicht 105 basieren auf Hardware und Software bzw. Firmware, die für die jeweilige Operation benötigt wird und dabei als Infrastruktur- & Ressourcenschicht 105 den darüber liegenden Schichten als Ressourcenobjekte zu Verfügung gestellt wird. Beispielsweise umfassen Objekte der Infrastruktur- & Ressourcenschicht 105 virtuelle Maschinen, virtuelle Links bzw. Verbindungen und virtuelle Netzwerke, z.B. virtuelle Zugangsknoten 231, 232, 233, virtuelle Netzwerkknoten 234, 235, 236, 237 und virtuelle Computerknoten 238, 239, 240. Wie der Begriff "virtuell" bereits sagt, stellt die Infrastruktur- & Ressourcenschicht 105 die Objekte in der Form einer "Infrastruktur als Dienst" 251, d.h. in einer abstrahierenden, virtualisierten Form der nächsthöheren Schicht 104 zur Verfügung.

Die Aktivierungsschicht 104 ist oberhalb der Infrastruktur- & Ressourcenschicht 105 angeordnet. Sie nutzt die Objekte der Infrastruktur- & Ressourcenschicht 105 und fügt diesen zusätzliche Funktionalität in Form von Software Objekten /VNFs hinzu um das Erzeugen von jeder Art von Netzwerk Slices zu ermöglichen und so eine Plattform als Dienst der nächsthöheren Schicht 103 bereitzustellen.

Softwareobjekte können in jeder Granularität existieren, und ein winziges oder ein sehr großes Fragment eines Netzwerk-Slice umfassen. Um die Erzeugung von Netzwerk Slices auf einem geeigneten Abstraktionslevel zu erlauben können in der Aktivierungsschicht 104 verschiedene abstrahierte Objekte 221 mit anderen abstrahierten Objekten und mit virtuellen Netzwerkfunktionen 222 kombiniert werden, um kombinierte Objekte 223 zu bilden, die in aggregierte Objekten 224 überführt werden können und in einer Objektbibliothek 225 der nächsthöheren Ebene zur Verfügung gestellt werden. Damit kann die Komplexität hinter den Netzwerk Slices verborgen werden. Beispielsweise kann ein Nutzer einen mobilen Breitband-Slice erzeugen und dabei lediglich KPI (Key Performance Indikator) definieren ohne dabei spezifische Features wie individuelle lokale Antennenbedeckung, Backhaul-Verbindungen und spezifische Parametrisierungsgrade spezifizieren zu müssen. Um eine offene Umgebung zu unterstützen und es zu erlauben, Netzwerkfunktionen auf Anforderung hinzuzufügen oder zu löschen, ist eine wichtige Fähigkeit der Aktivierungsschicht 104, dass sie die dynamische Umordnung von Funktionen und Konnektivitäten in einem Netzwerk Slice unterstützt, z.B. durch Verwendung von SFC ("Service Function Chaining" = Dienstfunktionenverkettung) oder modifizierender Software, so dass die Funktionalität eines Slice vollständig vordefiniert werden kann und sowohl näherungsweise statische Softwaremodule als auch dynamisch hinzufügbare Softwaremodule umfassen kann.

Ein Netzwerk Slice kann dabei als software-definierte Entität betrachtet werden, die auf einem Satz von Objekten basiert, welche ein vollständiges Netzwerk definieren. Die Aktivierungsschicht 104 spielt für den Erfolg dieses Konzepts eine Schlüsselrolle da sie alle Softwareobjekte umfasst kann, die notwendig sind, um die Netzwerk Slices und die entsprechenden Fertigkeiten zum Handhaben der Objekte bereitzustellen. Die Aktivierungsschicht 104 kann als eine Art von Netzwerk-Betriebssystem betrachtet werden komplementiert durch eine Netzwerkerzeugungsumgebung. Eine Aufgabe der Aktivierungsschicht 104 ist das Definieren der entsprechenden Abstraktionsebenen. So haben Netzwerkbetreiber ausreichend Freiraum um ihre Netzwerk Slices zu designen während der Plattform-Betreiber immer noch die physikalischen Knoten instandhalten und optimieren kann. So wird beispielsweise die Ausführung der alltäglichen Aufgaben wie das Hinzufügen oder Ersetzen von NodeBs etc. ohne das Einschreiten der Netzwerkkunden unterstützt. Die Definition geeigneter Objekte, welche ein vollständiges Telekommunikationsnetz modellieren, ist eine der wesentlichen Aufgaben der Aktivierungsschicht 104 beim Entwickeln der Netzwerk Slices Umgebung.

Ein Netzwerk Slice, auch als 5G Slice bezeichnet unterstützt die Kommunikationsdienste eines bestimmten Verbindungstyps mit einer bestimmten Art der Handhabung der C (Control bzw. Steuerungs-) und U-(User Data bzw. Nutzerdaten) Schicht. Ein 5G Slice setzt sich zusammen aus einer Sammlung von verschiedenen 5G Netzwerkfunktionen und spezifischen Funkzugangstechnologie- (RAT) Einstellungen, die zusammen kombiniert werden zum Nutzen des spezifischen Anwendungsfalls bzw. Use Case. Daher kann ein 5G Slice alle Domänen des Netzwerks umspannen, z.B. Softwaremodule, die auf Cloud-Knoten laufen, spezifische Konfigurationen des Transportnetzwerks, die eine flexible Lokation der Funktionen unterstützen, eine bestimmte Funkkonfiguration oder selbst eine bestimmte Zugangstechnologie so gut wie einer Konfiguration der 5G Geräte. Nicht alle Slices enthalten dieselben Funktionen, einige Funktionen die heute als wesentlich erscheinen für eine mobiles Netzwerk können sogar in einigen Slices nicht vorkommen. Die Intention des 5G Slice ist es, nur die Funktionen bereitzustellen, die für den spezifischen Use Case notwendig sind und alle anderen unnötigen Funktionalitäten zu vermeiden. Die Flexibilität hinter dem Slice Konzept ist der Schlüssel sowohl für das Ausweiten existierender Anwendungsfälle als auch für das Erzeugen neuer Anwendungsfälle. Drittpartei-Geräten kann damit Erlaubnis gewährt werden, bestimmte Aspekte des Slicing über geeignete APIs zu steuern, um so maßgeschneiderte Dienste bereitstellen zu können.

Die Anwendungsschicht 103 umfasst alle erzeugten Netzwerk Slices 210b, 211b, 212b und bietet diese als "Netzwerk als Service" verschiedenen Netzwerknutzern, z.B. verschiedenen Kunden an. Das Konzept erlaubt die Wiederbenutzung von definierten Netzwerk Slices 210b, 211b, 212b für verschiedene Anwender, z.B. Kunden, beispielsweise als eine neue Netzwerk Slice Instanz 210a, 211a, 212a. D.h. ein Netzwerk Slice 210b, 211b, 212b, welcher beispielsweise einer Automotive Anwendung zugeordnet ist, kann auch für Anwendungen verschiedener anderer industrieller Anwendungen genutzt werden. Die Slices Instanzen 210a, 211a, 212a, die von einem ersten Anwender erzeugt wurden, können beispielsweise unabhängig von den Slice Instanzen sein, die von einem zweiten Anwender erzeugt wurden, und das obwohl die gesamte Netzwerk Slice Funktionalität dieselbe sein kann.

Die Slices 210b, 211b, 212b formen Ausführungsbeispiele von Subnetzwerken eines Kommunikationsnetzwerks.

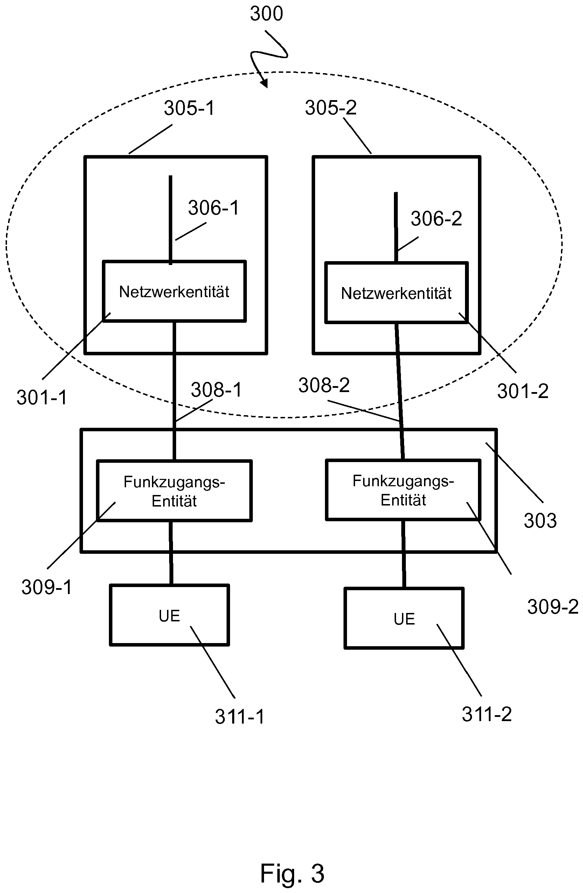

Fig. 3 zeigt eine Netzwerkentität 301 in einem Subnetzwerk 305 einer Mehrzahl von Subnetzwerken eines Kommunikationsnetzwerks 300, wobei dem Subnetzwerk 305 zumindest eine vorgegebene Dienstgüte gemäß zumindest einer Dienstgütevereinbarung zugeordnet ist. Die Netzwerkentität umfasst eine Kommunikationsschnittstelle 303 zum Empfangen des Datenverkehrs des Subnetzwerks 305, und einen Indizierer (307), welcher ausgebildet ist, dem Datenverkehr einen Dienstgüteindikator hinzuzufügen, um einen indizierten Datenverkehr zu erhalten, wobei der Dienstgüteindikator die Dienstgüte angibt.

Fig. 3 zeigt ein Kommunikationssystem, in welchem die Elemente gemäß den Aspekten der Erfindung gemeinsam dargestellt sind, mit einem Kommunikationsnetzwerk 300 mit einer Mehrzahl von Subnetzwerken 305, beispielsweise mit einem ersten Subnetzwerk 305-1 und mit einem zweiten Subnetzwerk 305-2, wobei jedem Subnetzwerk 305 eine vorgegebene Dienstgüte gemäß einer Dienstgütevereinbarung zugeordnet ist. Die Dienstgüten (QoS) definieren die Kommunikationsqualität für die Subnetzwerke 305-1, 305-2 an. Die Dienstgüten können beispielsweise eine Datenrate, eine Latenzzeit, eine Bit- oder Blockfehlerrate, Frequenz- und/oder Ressourcen wie Bandbreite oder Zeitschlitze spezifizieren bzw. angeben. Die Dienstgüten können gemäß einer Dienstgütevereinbarung (SLA: Service Level Agreement) für die Subnetzwerke 305 bzw. für die Datenströme der Subnetzwerke 305 definiert sein.

Die Dienstgüten der Subnetzwerke 305 sind gemäß einer Ausführungsform Benutzer unabhängig. Die Subnetzwerke 305 können darüber hinaus jedoch Benutzer abhängige Dienstklassen berücksichtigen.

In jedem Subnetzwerk 305 ist eine Netzwerkentität 301, 301-1, 301-2 angeordnet, wobei die Netzwerkentitäten 301 vorgesehen sind, einen Datenverkehr 306, 306-1, 306-2 des jeweiligen Subnetzwerks gemäß einer Dienstgüte, welche dem jeweiligen Subnetzwerk 305 zugeordnet ist, zu indizieren, um jeweils einen indizierten Datenverkehr 308, 308-1, 308-2 zu erhalten.

Die Subnetzwerke 305 kommunizieren beispielsweise über ein Funkzugangsnetzwerk 303 (RAN, Radio Access Network) mit mobilen Endgeräten 311, 311-1, 311-2.

Das Funkzugangsnetzwerk 303 umfasst Funkzugangsentitäten 309, 309-1, 309-2, beispielsweise Basisstationen, Router oder Remote Radio Units (RRU).

Die Funkzugangsentitäten 309, 309-1, 309-2 können unterschiedlichen Funkzugangstechnologien (RAT: Radio Acces Technology) zugeordnet sein, wie beispielsweise LTE, WLAN, WiFi, UMTS, GSM, und Funkzugangstechnologie für Machine Type Communication (MTC). Auf diese Weise können die mobilen Endgeräte (UE) 311-1, 311-2 über die Subnetzwerke 305-1, 305-2 kommunizieren. Im Funkzugangsnetzwerk 303 kann auch eine einzige Funkzugangsentität angeordnet sein.

Gemäß einer beispielhaften Ausführungsform sind die Netzwerkentitäten 301 mit dem Funkzugangsnetzwerk 303 verbunden und übermitteln dem Funkzugangsnetzwerk 303 die indizierten Datenströme 308, d.h. die indizierten Datenverkehre. Die Netzwerkentitäten 301 können jedoch zwischen beliebigen Netzwerkentitäten in den Subnetzwerken 305 angeordnet sein, beispielsweise Routern, Firewalls oder Gateways. Die weiteren Netzwerkentitäten verändern die Indizierung der Datenströme nicht.

Die indizierten Datenverkehre 308 enthalten jeweils einen Dienstgüteindikator, welcher die Dienstgüte des jeweiligen Subnetzwerks 305 angibt. Die Funkzugangsentitäten 309 können auf dieser Basis den indizierten Datenverkehren 308 die Kommunikationsressourcen zuweisen, um die Dienstgüten zu erfüllen. Dies kann beispielsweise durch die Zuweisung von mehr Kommunikationszeit, Bandbreite oder Frequenzspektren, beispielsweise im Falle einer Multiträgerübertragung wie OFDM, bewirkt werden.

Die Funkzugangsentitäten 309 weisen die eigenen Funkzugangsressourcen gemäß den geforderten Dienstgüten den indizierten Datenverkehren 308 eigenständig zu.

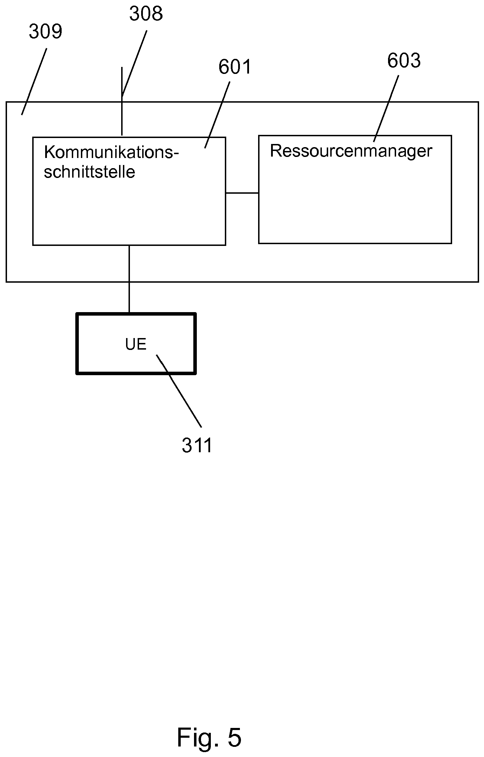

Hierzu können die Funkzugangsentitäten 309 die in Fig. 5 dargestellten Ressourcen-Manager 603 aufweisen, welche die Ressourcen der Funkzugangsentitäten wie Bandbreite, Sendeleistung dem jeweiligen Subnetzwerk 305-1, 305-2 zuordnen. Die Ressourcenmanager 603 können Scheduler sein.

Die Dienstgüte kann beispielsweise angeben, dass einem Subnetzwerk 95% der Kommunikationszeit mit 10 Mbps zugesichert werden.

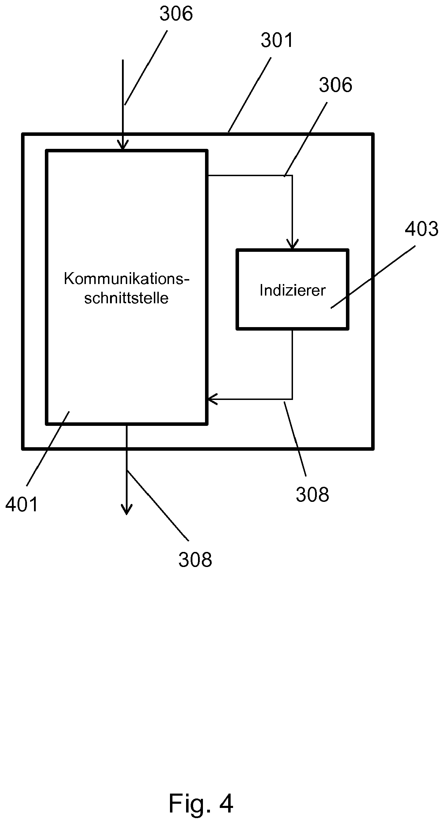

Fig. 4 zeigt ein Blockdiagramm einer Netzwerkentität 301 mit einer Kommunikationsschnittstelle 401 zum Empfangen des Datenverkehrs 306 des Subnetzwerks 305, welchem die Netzwerkentität 301 zugeordnet ist.

Die Netzwerkentität 301 umfasst einen Indizierer 403, welcher ausgebildet ist, dem Datenverkehr 306 einen Dienstgüteindikator hinzuzufügen, um einen indizierten Datenverkehr 308 zu erhalten, wobei der Dienstgüteindikator die Dienstgüte angibt, welche dem Subnetzwerk 305 zugeordnet ist.

Der Indizierer 403 kann ausgebildet sein, den Dienstgüteindikator einem oder jedem Paket des Datenverkehrs 307 hinzuzufügen. Dies kann beispielsweise dadurch geschehen, dass der Dienstgüteindikator in ein Datenfeld eines Datenrahmens, in welchem das jeweilige Datenpacken angeordnet ist, hineingeschrieben wird.

Der indizierte Datenverkehr 308 wird der Kommunikationsschnittstelle 401 zugeführt und ausgesendet, beispielsweise an eine Funkzugangsentität 309. Die Kommunikationsschnittstelle 401 kann hierzu eine netzseitige Schnittstelle für den Datenverkehr 306 sowie eine zugangsseitige Schnittstelle für den indizierten Datenverkehr 308 aufweisen.

Fig. 5 zeigt ein Blockdiagramm einer beispielhaften Funkzugangsentität 309 für die Kommunikation zwischen einem mobilen Endgerät 311 und einem Subnetzwerk 305 des Kommunikationsnetzwerks 300. Die Funkzugangsentität 309 umfasst eine Kommunikationsschnittstelle 601 zum Empfangen des indizierten Datenverkehrs 308 von dem Kommunikationsnetzwerk 300, beispielsweise von der Netzwerkentität 301, wobei der indizierte Datenverkehr einen Dienstgüteindikator aufweist, welcher die Dienstgüte des Subnetzwerks 305 angibt, und den vorstehend erwähnten Ressourcenmanager 603, welcher ausgebildet ist, dem indizierten Datenverkehr 308 Kommunikationsressourcen zuzuweisen, welche der Dienstgüte zugeordnet sind.

Die Kommunikationsschnittstelle 601 kann ausgebildet sein, den Dienstgüteindikator aus dem indizierten Datenverkehr 308 zu extrahieren und den Dienstgüteindikator dem Ressourcenmanager 603 zu übermitteln.

Der Ressourcenmanager 603 kann die Verarbeitungsressourcen der Funkzugangsentität 309 derart steuern, dass die Kommunikationsressourcen gemäß der Dienstgüte eingestellt werden. Hierzu kann der Ressourcenmanager 603 Hardware- und/oder Softwareressourcen wie beispielsweise einen Modulator, einen Codierer, Filter der Funkzugangsentität 309 steuern. Der Ressourcenmanager 603 kann ferner als Scheduler arbeiten und dem indizierten Datenstrom 308 Zeit- und/oder Frequenzressourcen gemäß der Dienstgüte zuweisen. Hierzu kann der Ressourcenmanager 603 eine Datenbank aufweisen, in welcher Dienstgüten bzw. Dienstgüteindikatoren Kommunikations- bzw. Funkzugangsressourcen zugeordnet sind.

## Patentansprüche

1. Netzwerkentität (301) für ein Subnetzwerk (305) einer Mehrzahl von Subnetzwerken (305) eines Kommunikationsnetzwerks (300), wobei dem Subnetzwerk (305) zumindest eine vorgegebene Dienstgüte gemäß zumindest einer Dienstgütevereinbarung zugeordnet ist, wobei die Netzwerkentität (301) die folgenden Merkmale aufweist:
eine Kommunikationsschnittstelle (401) zum Empfangen eines Datenverkehrs (306) des Subnetzwerks (305); und
einen Indizierer (403), welcher ausgebildet ist, dem Datenverkehr (306) einen Dienstgüteindikator hinzuzufügen, um einen indizierten Datenverkehr (308) zu erhalten, wobei der Dienstgüteindikator die Dienstgüte des Subnetzwerks (305) angibt, und wobei der Dienstgüteindikator ferner einen Subnetzwerk-Identifikator aufweist, welcher das Subnetzwerk (305) bezeichnet.

2. Netzwerkentität (301) nach Anspruch 1, wobei der Indizierer (403) ausgebildet ist, den Dienstgüteindikator zumindest einem Datenpaket oder jedem Datenpaket des Datenverkehrs (306) des Subnetzwerks (305) hinzuzufügen, um den indizierten Datenverkehr (308) zu erhalten.

3. Netzwerkentität (301) nach einem der vorstehenden Ansprüche, wobei der Indizierer (403) ausgebildet ist, den Dienstgüteindikator in ein Datenpaketfeld eines Datenrahmens des Datenverkehrs (306) hineinzuschreiben.

4. Netzwerkentität (301) nach einem der vorstehenden Ansprüche, wobei die Dienstgüte zumindest eine der folgenden Kommunikationsressourcen in dem Subnetzwerk definiert: Bandbreite, Datenrate, Bitrate, Bitfehlerrate, Blockfehlerrate, Übertragungsverzögerung, Anzahl und/oder Zeitlage von Zeitschlitzen, Frequenzspektrum.

5. Netzwerkentität (301) nach einem der vorstehenden Ansprüche, wobei der Dienstgüteindikator ferner einen Service Level Agreement-Indikator, SLA-Indikator, aufweist, wobei der SLA-Indikator die Dienstgütevereinbarung des Subnetzwerks (305) anzeigt, in welcher die Dienstgüte spezifiziert ist.

6. Netzwerkentität (301) nach einem der vorstehenden Ansprüche, wobei der Dienstgüteindikator ferner einen Datenverkehr-Indikator aufweist, wobei der Datenverkehr-Indikator zusätzlich eine Dienstgüte des Datenverkehrs (306) anzeigt.

7. Netzwerkentität (301) nach einem der vorstehenden Ansprüche, wobei der Dienstgüteindikator ferner einen Status-Indikator aufweist, wobei der Status-Indikator den gegenwärtigen Dienstgüte-Status des Datenverkehrs (306) anzeigt.

8. Netzwerkentität (301) nach einem der vorstehenden Ansprüche, wobei die Kommunikationsschnittstelle (401) ausgebildet ist, den indizierten Datenverkehr (308) an eine weitere Netzwerkentität des Subnetzwerkes oder an eine Funkzugangsentität (309) eines Funkzugangsnetzwerkes (303) auszusenden.

9. Netzwerkentität (301) nach einem der vorstehenden Ansprüche, wobei die Kommunikationsschnittstelle (401) eine optische Kommunikationsschnittstelle ist.

10. Kommunikationsnetzwerk (300) mit einer Mehrzahl von Subnetzwerken (305), wobei jedem Subnetzwerk (305) zumindest eine Dienstgüte zugeordnet ist, und wobei in jedem Subnetzwerk (305) eine Netzwerkentität (301) nach einem der vorstehenden Ansprüche angeordnet ist, um dem Datenverkehr (306) in jedem Subnetzwerk (305) jeweils einen Dienstgüteindikator hinzuzufügen, welcher die Dienstgüte des jeweiligen Subnetzwerks (305) anzeigt.

11. Kommunikationsnetzwerk (300) nach Anspruch 10, wobei die Subnetzwerke (305) Punkt-zu-Punkt-Netzwerke sind.

12. Kommunikationsnetzwerk (300) nach einem der vorstehenden Ansprüche, wobei das Kommunikationsnetzwerk (300) ein Kommunikationssetzwerk zumindest der fünften (5G) Generation ist, und wobei die Subnetzwerke (305) Netzwerk-Slices sind.

13. Verfahren zum Indizieren eines Datenverkehrs (306) in einem Subnetzwerk (305) eines Kommunikationsnetzwerks (300) mit einer Mehrzahl von Subnetzwerken (305), wobei dem Subnetzwerk (305) zumindest eine vorgegebene Dienstgüte gemäß zumindest einer Dienstgütevereinbarung zugeordnet ist,
wobei das Verfahren die folgenden Schritte umfasst:
Empfangen des Datenverkehrs des Subnetzwerks (305); und
Indizieren des Datenverkehrs (306) mit einem Dienstgüteindikator, um den indizierten Datenverkehr (308) zu erhalten, wobei der Dienstgüteindikator die Dienstgüte des Subnetzwerks (305) angibt, und wobei der Dienstgüteindikator ferner einen Subnetzwerk-Identifikator aufweist, welcher das Subnetzwerk (305) bezeichnet.

14. Verfahren nach Anspruch 13, wobei der indizierte Datenverkehr (308) an eine weitere Netzwerkentität des Subnetzwerkes (305) oder an eine Funkzugangsentität (309), insbesondere eine Basisstation, eines Funkzugangsnetzwerkes (303) ausgesendet wird.

15. Funkzugangsentität (309) für ein Funkzugangsnetzwerk (303), wobei die Funkzugangsentität für die Kommunikation zwischen einem mobilen Endgerät (311) und einem Subnetzwerk (305) eines Kommunikationsnetzwerks (300) mit einer Mehrzahl von Subnetzwerken (305) ist,
wobei dem Subnetzwerk (305) zumindest eine vorgegebene Dienstgüte gemäß zumindest einer Dienstgütevereinbarung zugeordnet ist, mit:
einer Kommunikationsschnittstelle (601) zum Empfangen eines indizierten Datenverkehrs (308) von dem Kommunikationsnetzwerk, wobei der indizierte Datenverkehr einen Dienstgüteindikator aufweist, welcher die Dienstgüte des Subnetzwerks angibt, und wobei der Dienstgüteindikator ferner einen Subnetzwerk-Identifikator aufweist, welcher das Subnetzwerk (305) bezeichnet; und
einem Ressourcenmanager (603), welcher ausgebildet ist, dem indizierten Datenverkehr (308) Kommunikationsressourcen zuzuweisen, welche der Dienstgüte zugeordnet sind.

16. Funkzugangsentität (309) nach Anspruch 15, wobei der Ressourcenmanager (603) ausgebildet ist, dem indizierten Datenverkehr (308) zumindest eine der folgenden Kommunikationsressourcen gemäß der Dienstgüte zuzuweisen: Bandbreite, Datenrate, Bitrate, Bitfehlerrate, Blockfehlerrate, Übertragungsverzögerung, Anzahl und/oder Zeitlage von Zeitschlitzen, Frequenzspektrum.

## Claims

1. Network entity (301) for a subnetwork (305) of a plurality of subnetworks (305) of a communication network (300), wherein the subnetwork (305) has at least one associated prescribed quality of service according to at least one quality of service agreement, wherein the network entity (301) has the following features:
a communication interface (401) for receiving a data traffic (306) of the subnetwork (305); and
an indexer (403) configured to add a quality of service indicator to the data traffic (306) in order to obtain an indexed data traffic (308), wherein the quality of service indicator indicates the quality of service of the subnetwork (305), and wherein the quality of service indicator further has a subnetwork identifier denoting the subnetwork (305).

2. Network entity (301) according to Claim 1, wherein the indexer (403) is configured to add the quality of service indicator to at least one data packet or each data packet of the data traffic (306) of the subnetwork (305) in order to obtain the indexed data traffic (308).

3. Network entity (301) according to either of the preceding claims, wherein the indexer (403) is configured to write the quality of service indicator to a data packet field of a data frame of the data traffic (306).

4. Network entity (301) according to one of the preceding claims, wherein the quality of service defines at least one of the following communication resources in the subnetwork: bandwidth, data rate, bit rate, bit error rate, block error rate, transmission delay, number and/or timing of time slots, frequency spectrum.

5. Network entity (301) according to one of the preceding claims, wherein the quality of service indicator further has a service level agreement indicator, SLA indicator, wherein the SLA indicator displays that quality of service agreement of the subnetwork (305) in which the quality of service is specified.

6. Network entity (301) according to one of the preceding claims, wherein the quality of service indicator further has a data traffic indicator, wherein the data traffic indicator additionally displays a quality of service of the data traffic (306).

7. Network entity (301) according to one of the preceding claims, wherein the quality of service indicator further has a status indicator, wherein the status indicator displays the present quality of service status of the data traffic (306).

8. Network entity (301) according to one of the preceding claims, wherein the communication interface (401) is configured to transmit the indexed data traffic (308) to a further network entity of the subnetwork or to a radio access entity (309) of a radio access network (303).

9. Network entity (301) according to one of the preceding claims, wherein the communication interface (401) is an optical communication interface.

10. Communication network (300) having a plurality of subnetworks (305), wherein each subnetwork (305) has at least one associated quality of service, and wherein each subnetwork (305) has a network entity (301) according to one of the preceding claims arranged in it in order to add to the data traffic (306) in each subnetwork (305) a respective quality of service indicator displaying the quality of service of the respective subnetwork (305).

11. Communication network (300) according to Claim 10, wherein the subnetworks (305) are point-to-point networks.

12. Communication network (300) according to one of the preceding claims, wherein the communication network (300) is a communication network at least of the fifth (5G) generation, and wherein the subnetworks (305) are network slices.

13. Method for indexing a data traffic (306) in a subnetwork (305) of a communication network (300) having a plurality of subnetworks (305), wherein the subnetwork (305) has at least one associated prescribed quality of service according to at least one quality of service agreement,
wherein the method comprises the following steps:
receiving the data traffic of the subnetwork (305); and
indexing the data traffic (306) with a quality of service indicator in order to obtain the indexed data traffic (308), wherein the quality of service indicator indicates the quality of service of the subnetwork (305), and wherein the quality of service indicator further has a subnetwork identifier denoting the subnetwork (305).

14. Method according to Claim 13, wherein the indexed data traffic (308) is transmitted to a further network entity of the subnetwork (305) or to a radio access entity (309), in particular a base station, of a radio access network (303).

15. Radio access entity (309) for a radio access network (303), wherein the radio access entity is for the communication between a mobile terminal (311) and a subnetwork (305) of a communication network (300) having a plurality of subnetworks (305), wherein the subnetwork (305) has at least one associated prescribed quality of service according to at least one quality of service agreement, having:
a communication interface (601) for receiving an indexed data traffic (308) from the communication network, wherein the indexed data traffic has a quality of service indicator indicating the quality of service of the subnetwork, and wherein the quality of service indicator further has a subnetwork identifier denoting the subnetwork (305); and
a resource manager (603) configured to allocate to the indexed data traffic (308) communication resources associated with the quality of service.

16. Radio access entity (309) according to Claim 15, wherein the resource manager (603) is configured to allocate to the indexed data traffic (308) at least one of the following communication resources according to the quality of service: bandwidth, data rate, bit rate, bit error rate, block error rate, transmission delay, number and/or timing of time slots, frequency spectrum.

## Revendications

1. Entité de réseau (301) pour un sous-réseau (305) d'une pluralité de sous-réseaux (305) d'un réseau de communication (300), dans laquelle au moins une qualité de service prédéterminée est associée au sous-réseau (305) conformément à au moins un accord de qualité de service, dans laquelle l'entité de réseau (301) présente les caractéristiques suivantes :
une interface de communication (401) destinée à recevoir un trafic de données (306) du sous-réseau (305) ; et
un indexeur (403) qui est conçu pour ajouter un indicateur de qualité de service au trafic de données (306) afin d'obtenir un trafic de données indexé (308), dans laquelle l'indicateur de qualité de service indique la qualité de service du sous-réseau (305) et dans laquelle l'indicateur de qualité de service comporte en outre un identificateur de sous-réseau qui désigne le sous-réseau (305).

2. Entité de réseau (301) selon la revendication 1, dans laquelle l'indexeur (403) est conçu pour ajouter l'indicateur de qualité de service à au moins un paquet de données ou à chaque paquet de données du trafic de données (306) du sous-réseau (305) afin d'obtenir le trafic de données indexé (308).

3. Entité de réseau (301) selon l'une des revendications précédentes, dans laquelle l'indexeur (403) est conçu pour écrire l'indicateur de qualité de service dans un champ de paquet de données d'une trame de données du trafic de données (306).

4. Entité de réseau (301) selon l'une des revendications précédentes, dans laquelle la qualité de service définit au moins l'une des ressources de communication suivantes dans le sous-réseau : largeur de bande, débit de données, débit binaire, taux d'erreur sur les bits, taux d'erreur sur les blocs, délai de transmission, nombre et/ou cadencement des créneaux temporels, spectre de fréquence.

5. Entité de réseau (301) selon l'une des revendications précédentes, dans laquelle l'indicateur de qualité de service comporte en outre un indicateur d'accord de niveau de service, indicateur SLA (Service Level Agreement), dans laquelle l'indicateur SLA indique l'accord de qualité de service du sous-réseau (305) dans lequel la qualité de service est spécifiée.

6. Entité de réseau (301) selon l'une des revendications précédentes, dans laquelle l'indicateur de qualité de service comporte en outre un indicateur de trafic de données, dans laquelle l'indicateur de trafic de données indique en outre une qualité de service du trafic de données (306).

7. Entité de réseau (301) selon l'une des revendications précédentes, dans laquelle l'indicateur de qualité de service comporte en outre un indicateur d'état, dans laquelle l'indicateur d'état indique l'état de qualité de service actuel du trafic de données (306).

8. Entité de réseau (301) selon l'une des revendications précédentes, dans laquelle l'interface de communication (401) est conçue pour transmettre le trafic de données indexé (308) à une autre entité de réseau du sous-réseau ou à une entité d'accès radio (309) d'un réseau d'accès radio (303).

9. Entité de réseau (301) selon l'une des revendications précédentes, dans laquelle l'interface de communication (401) est une interface de communication optique.

10. Réseau de communication (300) comprenant une pluralité de sous-réseaux (305), dans lequel au moins une qualité de service est associée à chaque sous-réseau (305), et dans lequel une entité de réseau (301) selon l'une des revendications précédentes est disposée dans chaque sous-réseau (305) afin d'ajouter respectivement au trafic de données (306) dans chaque sous-réseau (305) un indicateur de qualité de service qui indique la qualité de service du sous-réseau (305) respectif.

11. Réseau de communication (300) selon la revendication 10, dans lequel les sous-réseaux (305) sont des réseaux point à point.

12. Réseau de communication (300) selon l'une des revendications précédentes, dans lequel le réseau de communication (300) est un réseau de communication au moins de cinquième génération (5G), et dans lequel les sous-réseaux (305) sont des tranches de réseau.

13. Procédé d'indexation d'un trafic de données (306) dans un sous-réseau (305) d'un réseau de communication (300) comprenant une pluralité de sous-réseaux (305), dans lequel au moins une qualité de service prédéterminée est associée au sous-réseau (305) conformément à au moins un accord de qualité de service,
dans lequel le procédé comprend les étapes suivantes :
réception du trafic de données du sous-réseau (305) ; et
indexation du trafic de données (306) avec un indicateur de qualité de service afin d'obtenir le trafic de données indexé (308), dans lequel l'indicateur de qualité de service indique la qualité de service du sous-réseau (305) et dans lequel l'indicateur de qualité de service comporte en outre un identificateur de sous-réseau qui désigne le sous-réseau (305).

14. Procédé selon la revendication 13, dans lequel le trafic de données indexé (308) est transmis à une autre entité de réseau du sous-réseau (305) ou à une entité d'accès radio (309), en particulier à une station de base, d'un réseau d'accès radio (303).

15. Entité d'accès radio (309) pour un réseau d'accès radio (303),
dans laquelle l'entité d'accès radio est destinée aux communications entre un terminal mobile (311) et un sous-réseau (305) d'un réseau de communication (300) comprenant une pluralité de sous-réseaux (305),
dans laquelle au moins une qualité de service prédéterminée est associée au sous-réseau (305) conformément à au moins un accord de qualité de service, comprenant :
une interface de communication (601) destinée à recevoir un trafic de données indexé (308) en provenance du réseau de communication, dans laquelle le trafic de données indexé comporte un indicateur de qualité de service qui indique la qualité de service du sous-réseau et dans laquelle l'indicateur de qualité de service comporte en outre un identificateur de sous-réseau qui désigne le sous-réseau (305) ; et
un gestionnaire de ressources (603) conçu pour allouer au trafic de données indexé (308) des ressources de communication qui sont associées à la qualité de service.

16. Entité d'accès radio (309) selon la revendication 15, dans laquelle le gestionnaire de ressources (603) est conçu pour allouer au trafic de données indexé (308) au moins l'une des ressources de communication suivantes conformément à la qualité de service : largeur de bande, débit de données, débit binaire, taux d'erreur sur les bits, taux d'erreur sur les blocs, délai de transmission, nombre et/ou cadencement des créneaux temporels, spectre de fréquence.
